# EUROPÄISCHE PATENTSCHRIFT

(11) **EP 4 040 031 B1**
(45) Veröffentlichungstag und Bekanntmachung des Hinweises auf die Patenterteilung: **29.05.2024**
(21) Anmeldenummer: 21155295.5
(22) Anmeldetag: 04.02.2021
(51) Int. Cl.: F16L 55/44, F16L 55/30, H04W 4/80, F15B 19/00, G01D 11/24, H04L 67/12, H04W 4/38, F16L 101/30

(54) **SENSOREINRICHTUNG, DEREN VERWENDUNG, SOWIE FLUIDISCHES SYSTEM**
SENSOR DEVICE, USE OF SAME, AND FLUIDIC SYSTEM
DISPOSITIF CAPTEUR, SON UTILISATION, AINSI QUE SYSTÈME FLUIDIQUE

(43) Veröffentlichungstag der Anmeldung: 10.08.2022
(73) Patentinhaber: Asco Numatics GmbH, 75248 Ölbronn-Dürrn (DE)
(72) Erfinder: Steinle, Harald, 75443 Ötisheim (DE); Ams, Felix, 75236 Kämpfelbach (DE)
(74) Vertreter: Witte, Weller & Partner Patentanwälte mbB

(56) Entgegenhaltungen:
- EP-A1- 3 176 667
- DE-A1-102019 113 385
- US-A1- 2016 258 568
- US-A1- 2016 319 980

## Beschreibung

Die vorliegende Offenbarung betrifft eine Sensoreinrichtung, insbesondere eine gekapselte Sensoreinrichtung zur Überwachung eines Fluidstroms in einem Fluidpfad sowie geeignete Verwendungen eine Mehrzahl derartiger Sensoreinrichtungen. Ferner bezieht sich die vorliegende Offenbarung auf ein fluidisches System mit einer solchen Sensoreinrichtung.

Aus der DE 10 2019 113 385 A1 ist ein Molch zur Verwendung in mit einem strömenden Fluid gefüllten Rohrleitungen bekannt, umfassend einen Molchkörper, ein an dem Molchkörper angeordnetes, durch das strömende Fluid in Rotation versetzbares Antriebselement, eine mit dem Antriebselement in Verbindung stehende Generator-Einheit, durch die eine Bewegung des Antriebselements in elektrische Energie umwandelbar ist, und ein Festlegemittel über das die Position und/oder die Geschwindigkeit des Molches in der Rohrleitung festlegbar ist. Die Generator-Einheit ist zum Betrieb als Motor ausgebildet, über den das Antriebselement in Rotation versetzbar und zum Einstellen einer von der Strömungsgeschwindigkeit des strömenden Fluids in der Rohrleitung verschiedenen Geschwindigkeit des Molches ausgebildet ist, wobei der Molch einen mit der Generator-Einheit verbunden Energiespeicher für elektrische Energie aufweist.

Ein Inspektionsgerät in Form eines Molches ist beispielsweise aus der WO 2015/002701 A1 oder der DE 10 2013 011 626 A1 bekannt. Es handelt sich um spezifische großformatige Geräte für Pipelines und dergleichen. Gewöhnlich werden solche Geräte in der Pipeline dann eingesetzt, wenn kein Fluidstrom anliegt.

Aus der US 7,452,161 B2 ist ein Gerät zur Leckageabdichtung bekannt, das im Inneren einer Pipeline platzierbar ist, um dort bedarfsweise über einen expandierbaren Abschnitt ein Leck zu verschließen. Das Gerät ist molchartig gestaltet und weist in seinem Zentrum eine durchströmbare Öffnung auf, um einen Durchfluss durch die Pipeline zu ermöglichen.

Molche und ähnliche Inspektionsgeräte für Pipelines und Rohrleitungen mit großen Querschnitten werden üblicherweise anwendungsspezifisch hergestellt und konfiguriert. Ein Vorteil ist darin zu sehen, dass Pipelines von innen überwacht und gegebenenfalls sogar repariert werden können. Derartige Inspektionsgeräte sind jedoch üblicherweise an den (großen) Querschnitt der Pipelines angepasst. Die erforderliche Ausrüstung führt im Regelfall zu einer sperrigen Gestalt. Molche und ähnliche Inspektionsgeräte werden im Normalfall nur für Förderstrecken (Pipelines, Kanäle, Rohrleitungen und dergleichen) als solches eingesetzt, nicht in Zusammenhang mit der Regelung komplexerer fluidischer Systeme. Es geht bei einschlägigen Inspektionsgeräten in erster Linie um eine Inspektion und gegebenenfalls Reparatur der Leitungen als solches.

Aus der EP 3 176 667 A1 ist eine Steuereinrichtung in Form einer Vorsteuereinheit zur Bereitstellung eines Vorsteuerdrucks für eine Ventileinheit zur geregelten Bereitstellung eines Fluids bekannt. Die bekannte Steuereinrichtung nutzt verschiedene Sensoren, um eine Regeleinheit mit geeigneten Informationen (Druck, Temperatur und dergleichen) betreffend die Ist-Werte zu versorgen.

Die aus der EP 3 176 667 A1 bekannte Ventileinheit ist ein Beispiel für eine Vielzahl denkbarer fluidischer Systeme im industriellen, medizinischen und wissenschaftlichen Umfeld. Die Anforderungen an die Genauigkeit und Zuverlässigkeit derartiger fluidischer Systeme steigen stetig. Insbesondere soll das fluidische System über seine Lebensdauer die gewünschte Funktion in der gewünschten Genauigkeit bereitstellen. Ferner wird mittlerweile regelmäßig auch der Aufwand für Service und Reparaturen bei der Beurteilung der Gesamtkosten berücksichtigt. Zusätzlich besteht bei fluidischen Systemen im industriellen Umfeld häufig der Wunsch nach kundenspezifischen Lösungen, einer hohen Flexibilität und Angepasstheit sowie einer möglichst schnellen Umsetzung (Time-to-Market).

Häufig existieren in der Praxis gegenläufige Anforderungen. Dies kommt beispielsweise darin zum Ausdruck, dass einerseits eine Vielzahl von Messgrößen erfasst werden sollte, um ein fluidisches System hinreichend genau steuern und überwachen zu können, dass jedoch im Umkehrschluss dadurch der Aufwand für Projektierung, Herstellung und Installation sowie der Serviceaufwand während der Produktlebensdauer steigen.

Vor diesem Hintergrund liegt der Offenbarung die Aufgabe zugrunde, eine Sensoreinrichtung anzugeben, die flexibel und bedarfsweise multifunktional bei fluidischen Systemen verwendbar ist. Die Sensoreinrichtung soll sich möglichst zur verteilten Anordnung eignen. Die Sensoreinrichtung soll möglichst derart flexibel nutzbar sein, dass fluidische Systeme mit großem Funktionsumfang und bedarfsweise weitreichenden Steuermöglichkeiten mit vertretbarem Aufwand realisierbar sind. Ferner soll sich nach Möglichkeit der Aufwand beim Systementwurf verringern. Vorzugsweise eignet sich die Sensoreinrichtung zum Aufbau robuster fluidischer Systeme mit geringem Aufwand für Überwachung und Service. Ferner sollen im Rahmen der Offenbarung eine Verwendung solcher Sensoreinrichtungen sowie ein mit zumindest einer Sensoreinrichtung versehenes fluidisches System angegeben werden.

Gemäß einem ersten Aspekt bezieht sich die vorliegende Offenbarung auf eine gekapselte Sensoreinrichtung zur Überwachung eines Fluidstroms in einem Fluidpfad, mit einem Sensorkörper, der innerhalb eines Strömungskanals platzierbar ist und eine Längserstreckung aufweist, einer Energiespeichereinheit, einer Sensoreinheit mit zumindest einem Sensor zur Erfassung einer physikalischen Größe, und mit zumindest einem Kommunikationsmodul zur drahtlosen Kommunikation, wobei der Sensorkörper strömungsgünstig gestaltet ist, wobei der Sensorkörper eine verformbare Halteeinheit trägt, die in einem expandierten Zustand und einem kontrahierten Zustand betreibbar ist, um die Sensoreinrichtung im Strömungskanal festzulegen, und wobei die Halteeinheit zumindest ein Halteelement aus einer Formgedächtnislegierung aufweist.

Der Sensorkörper ist derart gestaltet, dass die Sensoreinrichtung direkt im Fluidpfad, also beispielsweise in einem Strömungskanal, platziert werden kann. Dies erfolgt vorzugsweise dergestalt, dass die Strömung nicht oder nur in einem akzeptablen Maß beeinträchtigt wird. Daher kann die Sensoreinrichtung weitgehend frei im fluidischen System platziert werden. Mit anderen Worten ist es vorstellbar, eine Mehrzahl derartiger Sensoreinrichtungen an geeigneten Positionen entlang der Pfade im fluidischen System vorzusehen, um die für die Überwachung und Steuerung des Systems erforderlichen Daten zu erfassen. D. h., im Gegensatz zu bekannten Inspektionsgeräten und Molchen für Pipelines können die Sensoreinrichtungen zwar in Leitungen und Kanälen platziert werden, die erfassten Daten stellen jedoch nicht in erster Linie auf den Zustand der Leitung selbst ab, sondern finden Eingang in die Steuerung und Regelung des Gesamtsystems.

In einer beispielhaften Ausgestaltung weist die Sensoreinheit eine Mehrzahl von Sensoren auf und ist folglich dazu ausgebildet, verschiedene Messwerte zu erfassen, also verschiedene physikalische Größen zu ermitteln. Hierbei kann es sich beispielsweise um Druck, Temperatur und dergleichen sowie davon abgeleitete Größen handeln.

Im Rahmen der vorliegenden Ausgestaltung ist unter dem Begriff "strömungsgünstig" zumindest eine sich verjüngende Gestaltung des Sensorkörpers hin zu seinem Ende zu verstehen. Mit anderen Worten kann dort eine Spitze ausgebildet sein. Der Sensorkörper kann an seinem Ende einem elliptischen Paraboloid ähneln. Andere Gestaltungen sind denkbar. Zumindest ist die dem Ende zugewandte Stirnseite des Sensorkörpers abgerundet, beispielsweise als konvex gekrümmte sphärische Fläche gestaltet. Die Gestaltung des Sensorkörpers führt dazu, dass sich der Strömungswiderstand - zumindest im Vergleich zu einer planen Stirnseite - verringert.

Der Strömungskörper ist insbesondere umströmbar gestaltet. Mit anderen Worten kann das Fluid außen am Strömungskörper entlang der Längserstreckung des Strömungskörpers entlang strömen. Das Fluid kann den Sensorkörper umströmen. Auf diese Weise eignet sich die Sensoreinrichtung gut zur Platzierung in einem Kanal mit zylindrischem oder näherungsweise zylindrischem Querschnitt. Dies ist nicht einschränkend zu verstehen

Ferner kann eine strömungsgünstige Gestaltung dadurch bewirkt werden, dass der Sensorkörper insgesamt einen Querschnitt aufweist, der klein im Verhältnis zum gegebenen freien Querschnitt des Strömungskanals ist. Wenn also nur ein kleiner Teil des Strömungskanals durch den Sensorkörper belegt ist, kann das strömende Fluid den verbliebenen freien Bereich nutzen. Der Sensorkörper kann sich über eine Halteeinheit an einer Wandung des Strömungskanals abstützen und wird auf diese Weise positioniert und bedarfsweise fixiert. In einer beispielhaften Ausgestaltung wird der Sensorkörper über die Halteeinheit im Zentrum des Strömungskanals positioniert.

Bei dem Fluid kann es sich um eine Flüssigkeit (Hydraulik) oder um Gase, insbesondere Luft (Pneumatik), handeln. Mischformen sind denkbar.

In einer beispielhaften Ausgestaltung ist die Sensoreinrichtung und insbesondere der Sensorkörper kompakt gestaltet und insbesondere miniaturisiert. Beispielsweise weist der Sensorkörper einen Querschnitt auf, dessen Umfangskreis einen Durchmesser von maximal 30 mm, vorzugsweise von maximal 20 mm, weiter bevorzugt von maximal 15 mm, noch weiter bevorzugt von maximal 10 mm aufweist.

Das Kommunikationsmodul kann zur bidirektionalen Übertragung ausgebildet sein. Mit anderen Worten ist das Kommunikationsmodul in einer beispielhaften Ausgestaltung als Senderempfängereinheit (Transceiver) gestaltet.

Gemäß einem weiteren Aspekt der vorliegenden Offenbarung wird eine Sensoreinrichtung zur Erfassung mindestens einer physikalischen Größe bereitgestellt, die zumindest einen Signalwandler zur Umwandlung der physikalischen Größe in ein elektrisches Signal, einen lokalen (elektrischen) Energiespeicher mit einer lokalen Ladeschaltung, und eine drahtlose, insbesondere bidirektionale und niederenergetische, Datenübertragungseinrichtung zur Übertragung der Messdaten und Parametern aufweist. Die Sensoreinrichtung ist offenbarungsgemäß dazu ausgebildet, in einer fluidischen Kavität, insbesondere in einem fluidischen Hohlraum, untergebracht zu werden, wobei der anliegende Fluidstrom nur unwesentlich (im Sinne von nicht wesentlich) beeinträchtigt wird.

Offenbarungsgemäße Sensoreinrichtungen eignen sich beispielhaft für eine Nutzung im Rahmen der prädiktiven Wartung (prädiktive Instandhaltung, Predictive Maintenance). Ferner kann eine Mehrzahl der Sensoreinrichtung genutzt werden, um die Regelgüte zu erhöhen. Insgesamt kann die Leistung des gegebenen fluidischen Systems erhöht werden. Beispielhaft erlauben die Sensoreinrichtungen eine anwendungsbegleitende Diagnose mit hohem Detaillierungsgrad. Auch sind Steuereingriffe und Regeleingriffe mit hohem Detaillierungsgrad vorstellbar, wenn eine Mehrzahl von Sensoreinrichtungen im fluidischen System verbaut ist.

Offenbarungsgemäße Sensoreinrichtungen eignen sich beispielhaft zur Verwendung bei pneumatischen Systemen, insbesondere bei sogenannten Ventilplatten oder Ventilblöcken, bei denen eine Mehrzahl von Ventilen und Aktuatoren vorgesehen ist. Bei einer derartigen Anwendung ist eine wesentliche Messaufgabe beispielsweise die Erfassung von Kenngrößen, die die Qualität und den Zustand der Druckluft beschreiben. Dies ist nicht einschränkend zu verstehen.

Neben pneumatischen Anwendungen sind selbstverständlich auch hydraulische Anwendungen denkbar.

In einer beispielhaften Ausgestaltung der Sensoreinrichtung ist diese multifunktional gestaltet. Beispielhaft weist die Sensoreinheit mehrere Sensoren zur Erfassung mehrerer physikalischer Größen auf, welche in elektrische Signale gewandelt werden. Die Sensoreinrichtung ist dazu ausgebildet, die physikalischen Größen repräsentierenden Informationen zu einer externen Einheit zu übertragen. In einer beispielhaften Ausgestaltung weist die Sensoreinrichtung selbst auch eine (gegebenenfalls limitierte) Fähigkeit zur Datenverarbeitung auf. In einem solchen Fall kann ferner ein lokaler Datenspeicher vorgesehen sein.

Bei den zu erfassenden Größen, insbesondere physikalischen Größen, handelt es sich insbesondere um solche, die für fluidische Systeme relevant sein können. Beispielhaft handelt es sich um Druck, Durchfluss, Ölgehalt, Partikelgröße (Verunreinigungen), Feuchtigkeit und/oder Temperatur des Fluids. Auch eine Überwachung der Umgebungstemperatur bzw. des Umgebungsdrucks ist vorstellbar. In Abhängigkeit vom gegebenen Fluid und der Gestaltung des fluidischen Systems können andere physikalische Größen relevant sein.

In einer beispielhaften Ausgestaltung ist die Sensoreinrichtung ferner dazu ausgebildet, eine Eigenüberwachung durchzuführen. Dies betrifft beispielsweise eine Temperaturüberwachung, eine Überwachung der Versorgungsspannung, eine Überwachung des Energieverbrauchs, eine Positionsüberwachung, eine Lagerung (Orientierung im Raum), und Ähnliches. Auch derartige Informationen sind für eine übergeordnete Steuervorrichtung gegebenenfalls von Interesse, insbesondere bei einem flexiblen Einsatz und der Verwendung einer Mehrzahl von Sensoreinrichtungen in einem fluidischen System. Die Eigenüberwachung kann auch die Energieversorgung betreffen, beispielsweise einen Ladezustand eines lokalen Energiespeichers. Ferner kann sich die Eigenüberwachung auf einen Status der Informationsübertragung beziehen, beispielsweise auf eine aktuelle Übertragungsqualität.

In einer weiteren beispielhaften Ausgestaltung ist die Sensoreinrichtung dazu ausgebildet, zumindest einen Aktuator des fluidischen Systems zu überwachen. Dies betrifft beispielsweise die Erfassung der Anzahl der Schaltvorgänge (von Ventilen), die Erfassung einer Position oder Stellung von Ventilgliedern, die Überwachung von Endlagen, die allgemeine Positionsüberwachung, die Ermittlung der Geschwindigkeit von Ventilgliedern, die Überwachung des Trägheitsverhaltens von Ventilglied oder Aktuatoren, sowie eine Überwachung von Beschleunigungswerten bzw. Schall/Schwingung (beispielsweise Vibrationen, Stöße, Resonanzverhalten).

Es versteht sich, dass einige der genannten Größen mittelbar über andere physikalische Größen erfasst werden können, zumindest durch eine mittelbare Erfassung.

Die Sensoreinrichtung kann innerhalb eines Strömungskanals (Fluidkanal) platziert werden. Dies umfasst in einer beispielhaften Ausgestaltung Hohlräume, Ausnehmungen, Bohrungen und Ähnliches, die mit dem fluidischen System in Kontakt stehen, dem fluidischen System zumindest benachbart sind. Die Positionierung der Sensoreinrichtung kann beispielsweise innerhalb bzw. im Umfeld von Gewindeanschlüssen, Schläuchen, Rohren, Durchgangsbohrungen, Sacklochbohrungen, Steckanschlüssen, Fittings, Versorgungsbohrungen, Pilotkanälen, Hilfskanälen, Versorgungskanälen und ähnlichem erfolgen, allgemein in Ausnehmungen, die mit dem fluidischen System in einer Wirkbeziehung stehen.

Erfasste Messdaten werden drahtlos an eine (externe) Kommunikationseinheit übermittelt. Es ist jedoch auch vorstellbar, dass Daten zwischen mehreren Sensoreinrichtungen eines hydraulischen Systems ausgetauscht werden. Mit anderen Worten kann zumindest eine Sensoreinrichtung als Relay (Extender) für eine andere Sensoreinrichtung dienen, damit die Sensoreinheit über zumindest ein Relay mittelbar mit einer externen Kommunikationseinheit kommunizieren kann.

Mit anderen Worten können mehrere Sensoreinheiten ein Netz (Mesh) zur Erhöhung der Reichweite, Übertragungssicherheit und Abdeckung bilden. In einer beispielhaften Ausgestaltung umfasst die Kommunikation eine Datenübertragung mit geringem Energiebedarf. Dies umfasst beispielsweise, aber nicht ausschließlich, RFID, LoRa (Long range, Low power), Bluetooth low energy (BLE) bzw. Bluetooth Smart und Bluetooth ultra-low power, Infrarot oder sichtbares Licht (optische Kommunikation), Near Field Communication (NFC) und Ähnliches.

In einer beispielhaften Ausgestaltung ist die Sensoreinrichtung mit einer autarken Energieversorgung versehen, die zumindest temporär einen autarken Betrieb erlaubt. Hierbei kann es sich beispielhaft um eine Batterie oder einen sonstigen Energiespeicher mit entsprechender Kapazität handeln.

Eine Sensoreinrichtung, die zumindest einige der vorstehend beschriebenen Funktionen aufweist, kann als multifunktionale Sensoreinrichtung bezeichnet werden.

Gemäß einer beispielhaften Ausgestaltung weist der Sensorkörper ein erstes Ende und ein zweites Ende auf, die voneinander abgewandt sind, wobei das erste Ende und das zweite Ende verjüngt sind. In einer weiteren beispielhaften Ausgestaltung weisen das erste und das zweite Ende eine einheitliche strömungsgünstige Gestaltung auf. Beispielhaft ist der Sensorkörper torpedoförmig oder kapselartig gestaltet. In einer beispielhaften Ausgestaltung sind das erste Ende und das zweite Ende symmetrisch gestaltet. Auf diese Weise kann die Sensoreinrichtung beliebig in Bezug auf eine gegebene Strömungsrichtung platziert werden (gegen die Strömung oder mit der Strömung).

Das erste Ende und das zweite Ende sind entlang der Längserstreckung des Sensorkörpers voneinander beabstandet und voneinander abgewandt. In einer beispielhaften Ausgestaltung wird der Sensor bei der Nutzung in einem Strömungskanal derart im Strömungskanal platziert, dass eine Längsachse des Sensorkörpers parallel zum Verlauf des Strömungskanals orientiert ist, vorzugsweise im Zentrum des Strömungskanals.

In einer beispielhaften Ausgestaltung wird die Sensoreinrichtung derart in einem Strömungskanal platziert, dass der Durchfluss nicht wesentlich verringert wird. Beispielhaft ist der Querschnitt des Sensorkörpers derart gestaltet, dass sich zwischen dem Sensorkörper und einer Wandung des Strömungskanals ein genügend großer freier Querschnitt ergibt, der durchströmbar ist. In einer beispielhaften Ausgestaltung ist daher unter einer strömungsgünstigen Gestaltung des Sensorkörpers eine Gestaltung zu verstehen, die den Nominalfluss durch die gegebene Passage nicht wesentlich verringert.

Gemäß einer weiteren beispielhaften Ausgestaltung ist die Halteeinheit berührungslos aktivierbar, um zwischen dem kontrahierten Zustand und dem expandierten Zustand zu wechseln. Beispielhaft kann die Sensoreinrichtung in einem kontrahierten (eingefahrenen) Zustand in einem Strömungskanal eingeführt und dort an die SollPosition bewegt werden. Sodann kann von außen eine Aktivierung erfolgen, so dass sich die Halteeinheit entfaltet (expandiert) wodurch die aktuelle Position der Sensoreinrichtung gesichert wird. Dies kann beispielhaft durch ein Verklemmen der Sensoreinrichtung im Kanal bewerkstelligt werden.

In einer beispielhaften Ausgestaltung ist die Halteeinheit berührungslos aktivierbar, um vom kontrahierten Zustand in den expandierten Zustand zu wechseln. In einer beispielhaften Ausgestaltung ist die Halteeinheit berührungslos aktivierbar, um vom expandierten Zustand in den kontrahierten Zustand zu wechseln. Beide Gestaltungen können bedarfsweise miteinander kombiniert werden.

Die Aktivierung der Halteeinheit kann vorteilhaft von außen erfolgen, gegebenenfalls außerhalb des Strömungskanals. Auf diese Weise erhöht sich der Freiheitsgrad für die Platzierung der Sensoreinrichtung.

Die Halteeinheit kann grundsätzlich direkt oder indirekt aktiviert werden. Beide Arten der Aktivierung können berührungslos/von außen erfolgen. Bei einer direkten Aktivierung von außen wird unmittelbar (physikalisch) auf die Halteeinheit eingewirkt. Bei einer indirekten Aktivierung wird beispielsweise eine Steuerung (zum Beispiel Steuermodul) im Sensorkörper der Sensoreinrichtung selbst mit einem Signal angesteuert, woraufhin die Halteeinheit mittelbar durch die Steuerung der Sensoreinrichtung aktiviert wird.

Auch die Bewegung der Sensoreinrichtung kann kontaktlos bzw. kabellos gesteuert werden. In einer beispielhaften Ausgestaltung kann die Sensoreinrichtung durch eine gegebene Strömung bis zu der gewünschten Position mitgenommen werden, woraufhin eine Fixierung/Klemmung durch ein Entfalten der Halteeinheit erfolgt. In einer weiteren Ausgestaltung kann die Sensoreinrichtung durch eine Kraftkopplung ohne unmittelbaren physischen Kontakt (beispielsweise Magnetismus) gezielt im hydraulischen System bewegt und platziert werden.

Die Halteeinheit weist zumindest ein Halteelement aus einer Formgedächtnislegierung auf. Formgedächtnislegierungen verhalten sich zumindest teilweise elastisch. Formgedächtnislegierungen weisen sogenannte pseudoelastische Eigenschaften auf. Beispielhaft weist die Halteeinheit Federelemente aus einer Formgedächtnislegierung auf, wobei sich die Federelemente im kontrahierten Zustand der Halteeinheit an den Strömungskörper anschmiegen, und wobei die Federelemente extern aktivierbar sind und im aktivierten Zustand nach außen drängen, um den Strömungskörper im Kanal festzusetzen.

In einer weiteren beispielhaften Ausgestaltung ist die Halteeinheit thermisch aktivierbar. In einer beispielhaften Ausgestaltung ist die Halteeinheit magnetisch aktivierbar. Die Aktivierung kann beispielhaft durch einen Temperaturwechsel erfolgen, vergleiche hierzu Halteelemente aus Nitinol. Die Aktivierung kann beispielhaft auch durch ein magnetisches Feld oder ein elektrisches Feld erfolgen.

Gemäß einer weiteren beispielhaften Ausgestaltung weist die Halteeinheit zwei oder mehr Halteelemente auf, die entlang der Längserstreckung des Sensorkörpers oder um die Längsachse des Sensorkörpers zueinander versetzt am Sensorkörper angeordnet sind. Gemäß einer weiteren beispielhaften Ausgestaltung sind zumindest zwei der Halteelemente spiralförmig gestaltet und gegensinnig orientiert. Mit anderen Worten umschlingen die Halteelemente zumindest abschnittsweise den Sensorkörper, zumindest in beispielhaften Ausgestaltungen. Gemäß dieser Ausgestaltung erstrecken sich die zumindest zwei Halteelemente spiralförmig um die durch die Längserstreckung des Sensorkörpers definierte Längsachse. Es sind auch Ausgestaltungen mit lediglich einem Halteelement denkbar.

Wenn die zumindest zwei Halteelemente einen unterschiedlichen Wickelsinn aufweisen, also eine entgegengesetzte Orientierung, ergibt sich im expandierten Zustand eine stabile zentrale Lage für den Sensorkörper im Strömungskanal, weil sich aufgrund der Abstützung der Halteelemente an der Kanalwand Gegenmomente ergeben, die wiederum unterschiedliche Richtungen aufweisen. Beispielhaft stehen die zumindest zwei Halteelemente im expandierten Zustand radial oder mit zumindest leichter Krümmung vom Sensorkörper ab. Auf diese Weise kann der Sensorkörper ähnlich einem Stern im Zentrum des Strömungskanals platziert werden.

Gemäß einer weiteren beispielhaften Ausgestaltung weist die Halteeinheit zwei oder mehr Halteelemente auf, die entlang des Umfangs des Sensorkörpers versetzt am Sensorkörper angeordnet sind. Mit anderen Worten können die Halteelemente als Blattfedern oder in ähnlicher Weise gestaltet sein, die bedarfsweise ausgelenkt werden, so dass insgesamt die Halteeinheit aufgespreizt werden kann, um die Sensoreinrichtung zu positionieren. Auf diese Weise kann der Sensorkörper im Zentrum des Strömungskanals platziert werden.

Gemäß einer weiteren beispielhaften Ausgestaltung weist der Sensorkörper einen dreieckigen oder sternförmigen Querschnitt aufweist. Dies umfasst auch näherungsweise dreieckige oder sternförmige Querschnitte quer zur Längserstreckung bzw. quer zur Längsachse des Sensorkörpers. Beispielhaft sind dreieckige Querschnitte denkbar, deren Sehnen konvex oder konkav gekrümmt sind. Auf diese Weise verringert sich die effektive Querschnittsfläche, die grundsätzlich die Strömung beeinträchtigen kann, weiter. Etwaige Spitzen der Dreiecksgestaltung oder Sterngestaltung können verrundet sein.

Gemäß einer weiteren beispielhaften Ausgestaltung ist die Energiespeichereinheit mit einem Empfangsmodul gekoppelt, das zur Entgegennahme von von einer drahtlosen Energieübertragungseinheit bereitgestellter Energie ausgebildet ist. Auf diese Weise kann die Sensoreinrichtung bedarfsweise mit Energie versorgt werden. Die Energiespeichereinheit ist beispielhaft als Batterie, Akkumulator oder Kondensatorspeicher gestaltet. Vorzugsweise ist das Empfangsmodul für die drahtlose/kontaktlose Energieübertragung ausgebildet.

Das Aufladen der Energiespeichereinheit kann beispielhaft über induktives Laden (magnetisches Wechselfeld), kapazitives Laden (elektrisches Wechselfeld), elektromagnetische Energieübertragung (Licht, elektromagnetische Strahlung, Laserstrahlung) und dergleichen erfolgen. Ferner ist auch eine Energieübertragung unter Nutzung einer Temperaturdifferenz, einer Druckdifferenz oder gegebener makroskopischer oder mikroskopischer Bewegungen (Vibrationen, Schallwellen, Resonanzbewegungen) vorstellbar. Auch die kinetische Energie des durchströmenden Fluids kann zum Aufladen der Energiespeichereinheit genutzt werden. Mit anderen Worten kann die Sensoreinrichtung zu Energy Harvesting befähigt sein.

Es versteht sich, dass das Kommunikationsmodul und das Empfangsmodul in einer beispielhaften Ausgestaltung auch durch ein und dasselbe Modul verwirklicht sein können, das dazu befähigt ist, sowohl Energie als auch Informationen auszutauschen. Dies kann beispielhaft über elektromagnetische Wellen erfolgen.

Gemäß einer weiteren beispielhaften Ausgestaltung weist die Sensoreinrichtung zumindest einen Marker oder einen Identifikator auf, der zumindest eine Identifizierung oder eine Positionserfassung der Sensoreinrichtung erlaubt, insbesondere durch eine übergeordnete Steuervorrichtung. Die Identifikation und bedarfsweise Positionserfassung kann über passive Marker oder aktiv wirksame Identifikatoren erfolgen.

In einer weiteren beispielhaften Ausgestaltung ist die Sensoreinrichtung nach Ort und Identität (Sensor ID) eindeutig im fluidischen System identifizierbar. Dies erlaubt auch dann eine Nutzung der erfassten Sensordaten, wenn die Positionierung und Verteilung der Sensoreinrichtung(en) im hydraulischen System nicht nach einem starr vorgegebenen Schema erfolgt.

Gemäß einer beispielhaften Ausgestaltung ist das Kommunikationsmodul dazu befähigt, eine Identifikationskennung bereitzustellen, die durch eine externe Kommunikationseinheit erfassbar ist. Die Identifikationskennung ist in einer beispielhaften Ausgestaltung auch für eine Lokalisierung nutzbar. Es ist grundsätzlich auch vorstellbar, das zur Energieübertragung genutzt Empfangsmodul für die Identifizierung und/oder Lokalisierung zu nutzen. Mit anderen Worten erfolgt die Identifizierung über einen Code auf Signalbasis. Es ist also grundsätzlich vorstellbar, die vorgesehene Kommunikationsmethode auch für die Identifikation zu nutzen.

Es ist jedoch auch vorstellbar, einen diskreten Marker oder Identifikator vorzusehen, der unabhängig vom Kommunikationsmodul und vom Empfangsmodul durch eine externe Einheit auslesbar ist.

Gemäß einer weiteren beispielhaften Ausgestaltung erlaubt der Marker oder Identifikator eine räumliche und zeitliche Ortung der Sensoreinrichtung. Eine zeitliche Ordnung umfasst beispielhaft eine Synchronisierung einer Sensoreinrichtung oder mehrere Sensoreinrichtungen mit einer übergeordneten Steuervorrichtung. Auf diese Weise wird eine Echtzeit-Verarbeitung und eine Erfassung des Echtzeit-Verhaltens, zumindest eines Quasi-Echtzeit-Verhaltens ermöglicht.

Die Identifikationsinformation einer Sensoreinrichtung umfasst beispielsweise Informationen, die aus der Gruppe ausgewählt sind, die Folgendes aufweist: Sender/Empfängerkennung, Sensorname, physikalische Messgrößen, Messbereich, Regelparameter, Fehlerspeicher, Diagnosedaten, Messwertspeicher, Grenzwerte, Alarmwerte, Versionsnummer, Softwarestand, Herstelldatum, Wartungsdatum und Ähnliches. Auf diese Weise können diverse Statusdaten gemeinsam mit der Identifikation abgefragt und von der übergeordneten Steuervorrichtung genutzt werden.

Die kontinuierliche Abfrage derartiger Informationen erlaubt eine Überwachung des fluidischen Systems im Zeitablauf, bedarfsweise über dessen Produktlebensdauer. Auf diese Weise können auch allmähliche Veränderungen (Drift) oder ein allmählicher Verschleiß erfasst und in die Steuerung und Regelung eingehen. In einer beispielhaften Ausgestaltung werden multiple Daten erfasst und für die prädiktive Wartung (Predictive Maintenance) genutzt.

Ein weiterer Aspekt der vorliegenden Offenbarung betrifft die Verwendung einer Mehrzahl von Sensoreinrichtungen, die gemäß einer offenbarungsgemäßen Ausgestaltung ausgebildet sind, zur Steuerung oder Regelung zumindest eines Stellglieds eines fluidischen Systems, wobei eine Mehrzahl von Messgrößen erfasst wird und in die Steuerung oder Regelung einfließt.

Mit anderen Worten kann mit geringem Aufwand ein Sensorarray definiert werden, um komplexe Regelaufgaben zu erfüllen und um die hierzu erforderlichen Daten im fluidischen System zu erfassen. Mehrere Sensoreinrichtungen bilden ein Sensorarray, auf das die übergeordnete Steuervorrichtung zugreifen kann.

Das multifunktionale Konzept und die eindeutige Identifizierbarkeit und Lokalisierbarkeit erlaubt auch die Handhabung einer Vielzahl gleichartiger Sensoreinrichtungen, die gegebenenfalls alle vom gleichen Typ sind. Bei konventionellen Sensoren wird darauf Wert gelegt, dass diese nicht einfach verwechselbar sind. Daher wird häufig bewusst auf verschiedene Sensortypen zurückgegriffen, um ein fluidisches System mit Sensoren auszustatten. Ferner haben konventionelle Sensoren häufig ein begrenztes Einsatzspektrum, so dass auch aus diesem Grund verschiedenste Typen genutzt werden. Sofern die Sensoreinrichtung zur eindeutigen Identifizierung (wiederholbar und gegebenenfalls während der Produktlebensdauer) ausgelegt ist, können Fehlzuordnungen vermieden werden. Es kann eine hohe Anzahl von Sensoreinrichtungen verbaut werden, ohne dass die Übersichtlichkeit leidet.

Das multifunktionale Sensorkonzept erlaubt insbesondere den Aufbau von Regelungssystemen mit Echtzeitverhalten. In einer beispielhaften Ausgestaltung können komplexe Mehrgrößenregelungen auf Basis einer Vielzahl physikalischer Größen realisiert werden. Die Vielzahl an Sensoreinrichtungen und zur Verfügung stehender Informationen erlaubt den Einsatz erweiterter Regelungsmethoden, beispielsweise umfassend nichtlineare Matrixregelung, neuronale Netzwerke oder künstliche Intelligenz.

In einer beispielhaften Ausgestaltung werden multifunktionale Sensoreinrichtungen verwendet, die grundsätzlich befähigt sind, verschiedene Messgrößen zu erfassen, wobei bedarfsweise aus der Menge der möglichen Messgrößen für die aktuelle Steueraufgabe geeignete Messgrößen ausgewählt werden.

Auf diese Weise kann mit einem Typ der Sensoreinrichtung eine Vielzahl von Aufgaben erfüllt werden. Die Teilevielfalt verringert sich. Die Sensoreinrichtungen sind multifunktional einsetzbar.

Ferner ist eine gewisse Redundanz gegeben, wenn eine Mehrzahl von Sensoreinrichtungen in einem System vorgesehen ist. Beispielsweise kann eine Sensoreinrichtung die Aufgaben einer anderen Sensoreinrichtung zumindest teilweise übernehmen, wenn Defekte o. ä. festgestellt werden. Vorteile können sich beispielsweise hinsichtlich der Datenqualität und der Konsistenz ergeben, wenn mehrere Sensoreinrichtungen zur Verfügung stehen. Wenn eine Vielzahl von Sensoreinrichtungen zur Verfügung steht, kann auf Basis der erfassten realen Daten eine Priorisierung der Sensoreinrichtungen vorgenommen werden. Es muss also nicht zwingend vorab mit großem Aufwand ermittelt werden, wo genau eine einzelne Sensoreinrichtung idealerweise zu platzieren wäre.

Eine beispielhafte Nutzung einer oder mehrere solcher Sensoreinrichtungen kann in einem fluidischen System zur Regelung eines Aktuators gesehen werden, bei dem Parameter und Zustandsgrößen wie Position, Geschwindigkeit, Beschleunigung bei gegebener Last in die Regelung einfließen.

Mehrere Sensoreinrichtungen können miteinander gekoppelt werden, um einen Mehrgrößenregler mit Ist-Werten zu versorgen. Beispielhaft ist eine Vielzahl oder Mehrzahl von Messwerten unter Nutzung von Methoden der künstlichen Intelligenz handhabbar.

Gemäß einem weiteren Aspekt bezieht sich die vorliegende Offenbarung auf ein fluidisches System mit zumindest einem Fluidpfad mit einem Strömungskanal, der eine Wandung aufweist, zumindest einem Stellglied zur Steuerung einer Fluidströmung durch den Strömungskanal, zumindest einer Sensoreinrichtung gemäß einer offenbarungsgemäßen Ausgestaltung, vorzugsweise zwei oder mehr solcher Sensoreinrichtungen, zumindest einer Kommunikationseinheit zur Erfassung von vom Kommunikationsmodul bereitgestellten Daten, und mit einer Steuervorrichtung, die auf Basis der bereitgestellten Daten das zumindest eine Stellglied ansteuert.

Die Kommunikationseinheit kann als Senderempfängereinheit (Transceiver) gestaltet sein. Die bereitgestellten Daten sind insbesondere Sensordaten. Bei dem Stellglied kann es sich beispielhaft um einen Zylinder, ein Ventil, eine Drossel, eine Pumpe oder dergleichen handeln. Das Stellglied kann allgemein auch ein angesteuerter Aktuators sein, beispielsweise ein hydraulischer oder pneumatischer Zylinder.

Gemäß einer weiteren beispielhaften Ausgestaltung weist das fluidische System ferner eine Energieübertragungseinheit auf, die dazu ausgebildet ist, der Energiespeichereinheit der Sensoreinrichtung drahtlos Energie zuzuführen. Im Rahmen der vorliegenden Offenbarung bedeutet "drahtlos", dass kein unmittelbarer physischer/mechanischer Kontakt vorgesehen ist.

Gemäß einer weiteren beispielhaften Ausgestaltung steht der Steuervorrichtung ein computergestütztes Modell der zumindest einen Sensoreinrichtung zur Verfügung. Dies vereinfacht die Handhabung und Verwaltung der multifunktionalen Sensoreinrichtungen. Mit anderen Worten steht ein digitaler Zwilling der zumindest einen Sensoreinrichtung zur Verfügung.

Gemäß einer weiteren beispielhaften Ausgestaltung steht der Steuervorrichtung ein computergestütztes Modell des zumindest einen Stellglieds und vorzugsweise ein computergestütztes Modell des zumindest einen Fluidpfades zur Verfügung steht. Mit anderen Worten steht ein digitaler Zwilling des angesteuerten Stellglieds und gegebenenfalls des Fluidpfads zur Verfügung, zumindest im Umfeld der platzierten Steuervorrichtung.

Die computergestützten Modelle können miteinander kombiniert werden. Das computergestützte Modell kann auch computergestützte Modelle einzelner Leitungen, Stellglieder und weitere Elemente des fluidischen Systems umfassen.

Gemäß einer weiteren beispielhaften Ausgestaltung steht der Steuervorrichtung ein digitaler Zwilling zumindest eines Teilbereichs des fluidischen Systems zur Verfügung, wobei der digitale Zwilling computergestützte Modelle von Systemkomponenten umfasst, und wobei der digitale Zwilling eine aktuelle Position (und gegebenenfalls Identität) der zumindest einen Sensoreinrichtung berücksichtigt.

Ein digitaler Zwilling ist ein virtuelles Modell eines mehr oder weniger komplexen Gebildes technischer Art. Der digitale Zwilling nutzt reale Ist-Daten, die von den Sensoren der Sensoreinrichtungen erfasst werden, und zeigt ein entsprechendes Systemverhalten (auf der digitalen Ebene).

Ein digitaler Zwilling vereinfacht die Handhabung und Steuerung komplexer Systeme, insbesondere solcher mit einer Vielzahl von Sensoreinrichtungen. Auf Basis der vom digitaler Zwilling bereitgestellten Informationen kann sich die Analyse des Verhaltens des fluidischen Systems und insbesondere die Überwachung des realen fluidischen Systems verbessern. Ein digitaler Zwilling erleichtert das Verständnis komplexer Systeme, beispielsweise durch geeignete Visualisierung und Simulation.

Der digitale Zwilling erweitert das Anwendungsspektrum offenbarungsgemäßer Sensoreinrichtungen. Dies zeigt sich beispielsweise im Rahmen der prädiktiven Instandhaltung (Predictive Maintenance). Ferner lässt sich insgesamt eine Erhöhung der Regelgüte und gegebenenfalls eine Erhöhung der Leistung des fluidischen Systems erzielen. Beispielhaft kann sich insgesamt eine erhöhte Lebensdauer bei verringerten Wartungskosten und Servicekosten ergeben.

Ein digitaler Zwilling basiert auf dem realen fluidischen System und stellt ein computerbasierte Modell desselben dar. Der digitale Zwilling nutzt ferner von den Sensoreinrichtungen bereitgestellte Informationen. Die Übersichtlichkeit leidet auch nicht darunter, dass eine Vielzahl verschiedener Messwerte (Kanäle) erfassbar ist. Infolgedessen erhöht sich dadurch die Aussagekraft des digitalen Zwillings.

Der digitale Zwilling kann ferner eine Basis für den Entwurf des fluidischen Systems und die Integration einer Mehrzahl offenbarungsgemäßer Messeinrichtungen bereitstellen. Ferner wird sich durch ein digitaler Zwilling die Aussagekraft etwaiger Simulationen, die zunächst auf der digitalen Ebene durchgeführt werden. Jeder Vergleich mit dem physischen Original fließt unmittelbar in die weitere Optimierung des digitalen Zwillings ein.

Bei wiederkehrenden, zumindest ähnlichen Anwendungen für fluidische Systeme beschleunigt der digitale Zwilling (aufgrund der mit bereits etablierten Anwendungen gesammelten Erfahrungen) den Systementwurf und das Einfahren des Regelsystems.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile der Offenbarung ergeben sich aus der nachfolgenden Beschreibung mehrerer bevorzugter Ausführungsbeispiele unter Bezugnahme auf die Zeichnungen. Es zeigen:
- Fig. 1: eine schematische Seitenansicht einer Ausführungsform einer Sensoreinrichtung;
- Fig. 2: eine vereinfachte frontale Ansicht einer Ausführungsform einer Sensoreinrichtung in einem eingebauten Zustand;
- Fig. 3: eine weitere vereinfachte frontale Ansicht auf Basis von Fig. 2 zur Veranschaulichung einer beispielhaften strömungsgünstigen Gestaltung;
- Fig. 4: einen schematischen Längsschnitt durch einen Sensorkörper einer Ausführungsform einer gekapselten Sensoreinrichtung;
- Fig. 5: eine an Fig. 4 angelehnte Querschnittsdarstellung durch einen Sensorkörper einer gekapselten Sensoreinrichtung;
- Fig. 6: eine vereinfachte frontale Ansicht einer Sensoreinrichtung zur Veranschaulichung einer Halteeinheit zur Platzierung der Sensoreinrichtung;
- Fig. 7: eine weitere, an Fig. 6 angelehnte frontale Ansicht einer Sensoreinrichtung zur Veranschaulichung eines weiteren Elements einer Halteeinheit;
- Fig. 8: eine auf den Figuren 6 und 7 basierende frontale Ansicht zur Veranschaulichung einer Sensoreinrichtung im platzierten Zustand in einem Strömungskanal;
- Fig. 9: eine schematische Seitenansicht einer Ausführungsform einer Sensoreinrichtung zur Veranschaulichung einer weiteren Ausgestaltung einer Halteeinheit;
- Fig. 10: eine teilweise geschnittene Darstellung der Sensoreinrichtung gemäß Fig. 9 entlang der Linie X-X in Fig. 9;
- Fig. 11: eine weitere teilweise geschnittene Darstellung der Sensoreinrichtung gemäß Fig. 9 entlang der Linie XI-XI in Fig. 9;
- Fig. 12: eine weitere schematische Seitenansicht einer Ausführungsform einer Sensoreinrichtung zur Veranschaulichung einer weiteren Ausgestaltung einer Halteeinheit;
- Fig. 13: ein schematisches Blockdiagramm zur Veranschaulichung einer beispielhaften Ausgestaltung einer Sensoreinrichtung, die mit externen Einheiten interagiert;
- Fig. 14: eine schematische Blockdarstellung eines hydraulischen Systems, das eine Mehrzahl von Sensoreinrichtungen nutzt;
- Fig. 15: eine gebrochene, teilweise geschnittene Ansicht eines Strömungskanals zur Veranschaulichung einer Kommunikation zwischen einer Sensoreinrichtung und einer externen Einheit;
- Fig. 16: eine gebrochene, teilweise geschnittene Ansicht eines Strömungskanals zur Veranschaulichung einer Kommunikation zwischen zwei Sensoreinrichtungen und einer externen Einheit;
- Fig. 17: eine auf Fig. 14 basierende schematische Blockdarstellung eines hydraulischen Systems, dessen Steuervorrichtung ein computergestütztes Modell des hydraulischen Systems nutzt;
- Fig. 18: ein schematisches Blockdiagramm zur Veranschaulichung einer beispielhaften Ausgestaltung eines Verfahrens zur Platzierung einer Sensoreinrichtung in einem fluidischen System;
- Fig. 19: ein schematisches Blockdiagramm zur Veranschaulichung einer beispielhaften Ausgestaltung eines Verfahrens zur Regelung eines fluidischen Systems; und
- Fig. 20: ein schematisches Blockdiagramm zur Veranschaulichung einer weiteren Ausgestaltung eines Verfahrens zur Regelung eines fluidischen Systems.

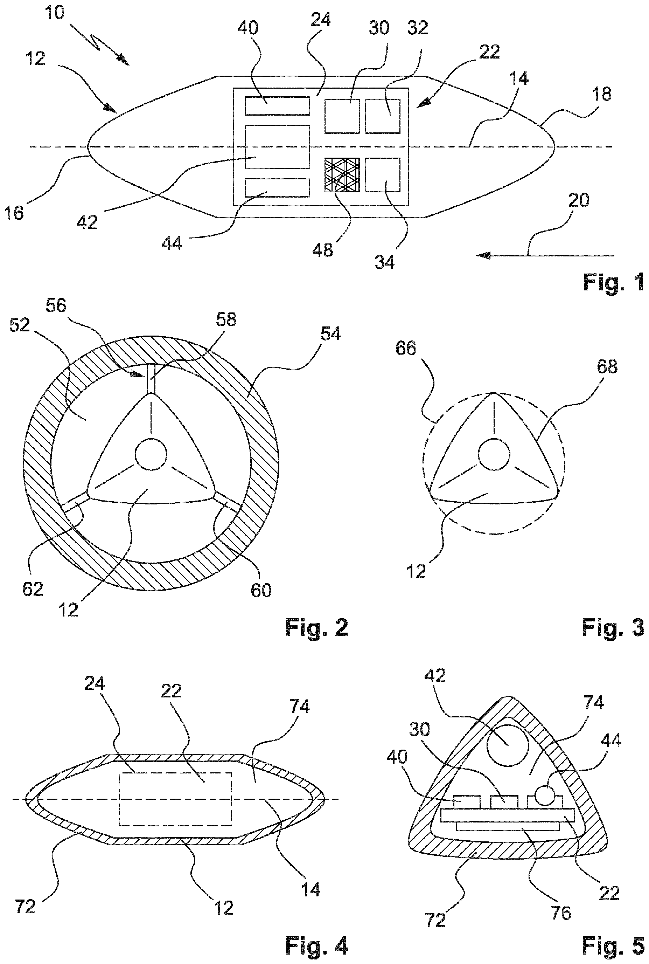

Fig. 1 veranschaulicht anhand einer vereinfachten schematischen Darstellung eine insgesamt mit 10 bezeichnete Sensoreinrichtung. Die Sensoreinrichtung 10 kann auch als miniaturisierte, multifunktionale Sensoreinrichtung bezeichnet werden. Die Sensoreinrichtung 10 weist einen Sensorkörper 12 auf, der sich zwischen einem ersten Ende 16 und einem zweiten Ende 18 entlang einer Längsachse 14 erstreckt. Entlang der Längsachse 14 ergibt sich die Längserstreckung des Sensorkörpers 12. Der Sensorkörper 12 ist strömungsgünstig gestaltet, vergleiche auch die Darstellungen in Fig. 2 und Fig. 3. In Fig. 1 beschreibt ein mit 20 bezeichneter Pfeil eine denkbare Strömungsrichtung.

Der Sensorkörper 12 beherbergt eine Sensoreinheit 22. Komponenten der Sensoreinheit 22 sind im Ausführungsbeispiel an/auf einer Leiterplatte 24 angeordnet, die auch als Substrat bezeichnet werden kann. Die Sensoreinheit 22 umfasst im Ausführungsbeispiel Sensoren 30, 32, 34 für physikalische Größen, beispielsweise Druck, Temperatur, Durchfluss, Schwingungen und Ähnliches. Erfasste Sensordaten können über ein Kommunikationsmodul 40 drahtlos übermittelt werden. Im Ausführungsbeispiel ist das Kommunikationsmodul 40 zur bidirektionalen Kommunikation befähigt. Die Kommunikation kann zwischen der Sensoreinrichtung 10 und einer übergeordneten Einheit, jedoch auch zwischen mehreren Sensoreinrichtungen 10 erfolgen.

Die Sensoreinrichtung 10 ist in einer beispielhaften Ausgestaltung als autarke Sensoreinrichtung gestaltet. Demgemäß beherbergt der Sensorkörper 12 eine Energiespeichereinheit 42, der ein Empfangsmodul 44 zum Laden des Energiespeichers zugeordnet ist. Beispielhaft handelt es sich bei der Energiespeichereinheit 42 um eine Batterie, einen Akkumulator, einen Speicherkondensator oder ähnliches.

In Fig. 1 ist ferner mit 48 ein Marker oder Identifikator angedeutet. Auf diese Weise kann die Identität und bedarfsweise die Position (und gegebenenfalls Orientierung) der Sensoreinrichtung 10 genau erfasst werden. Eine Identifikation kann weitere Zustandsgrößen umfassen. Eine Identifikation kann räumliche Ordnung und zeitliche Ortung (zu Zwecken der Synchronisierung) umfassen. Die Identifikation erfolgt über externe Geräte, die insbesondere nicht in direktem physischen Kontakt mit der Sensoreinrichtung 10 stehen.

Die Figuren 2 und 3 zeigen frontale Ansichten der Sensoreinrichtung 10. In Fig. 2 ist die Sensoreinrichtung 10 mit dem Sensorkörper 12 im Zentrum eines Strömungskanals 52 platziert. Der Sensorkörper 10 stützt sich über eine Halteeinheit 56 an einer Wandung 54 des Strömungskanals 52 ab.

Im Ausführungsbeispiel umfasst die Halteeinheit 56 drei Halteelemente 58, 60, 62. Die Halteelemente 58, 60, 62 sind radial um den Sensorkörper 12 verteilt angeordnet. Der Sensorkörper 12 ist in Fig. 2 derart im Strömungskanal 52 platziert, dass die sich ergebende Fluidströmung am Sensorkörper 12 entlang strömen kann. Die Halteelemente 58, 60, 62 schränken die durchströmbare Fläche nur unwesentlich ein.

Fig. 3 veranschaulicht einen denkbaren äußeren Querschnitt des Sensorkörpers 12 bei frontaler Ansicht. Im Ausführungsbeispiel ist der Sensorkörper 12 etwa dreieckig gestaltet, wobei Sehnen 68 mit konvexer Krümmung und abgerundete Ecken vorgesehen sind. Der Querschnitt des Sensorkörpers 12 beansprucht eine geringere Fläche als ein Umfangskreis 66 um den Sensorkörper 12.

Es versteht sich, dass die Darstellungen in den Figuren in erster Linie exemplarischer Natur und nicht zwingend maßstabsgetreu sind. Es versteht sich, dass beispielsweise der Sensorkörper 12 aus Veranschaulichungsgründen übertrieben dargestellt ist. Verschiedene offenbarungsgemäße Ausgestaltungen sehen vor, dass der Sensorkörper 12 die Strömung im Strömungskanal 52 nur unwesentlich beeinträchtigt.

Fig. 4 basiert auf der Darstellung in Fig. 1 und zeigt, dass der Sensorkörper 12 ein Gehäuse 72 aufweist, das einen Innenraum 74 umgibt und bedarfsweise kapselt. Auf diese Weise ist die Sensoreinrichtung 10 insgesamt sehr robust und medienresistent gestaltet.

Fig. 5 zeigt ein beispielhaftes Layout im Innenraum 74 des Sensorkörpers 12. Die Leiterplatte 22 trägt verschiedene Komponenten, beispielsweise einen oder mehrere Sensoren 30, das Kommunikationsmodul 40, das Empfangsmodul 44 und eine (lokale) Steuereinheit 76. Ferner ist im Innenraum 74 die Energiespeichereinheit 42 angeordnet. Das Gehäuse 72 umschließt den Innenraum 74 und dichtet diesen nach außen ab.

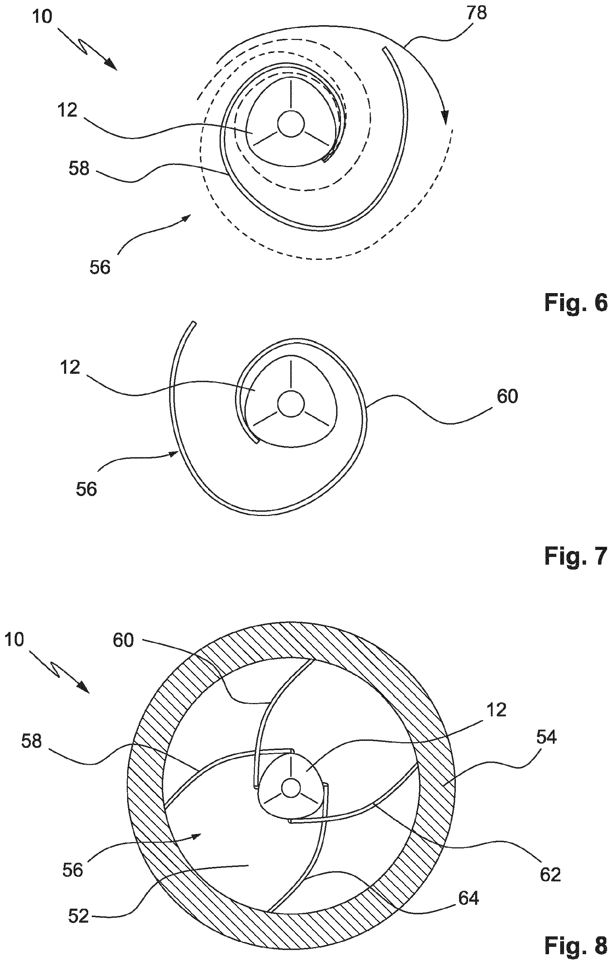

Mit Bezugnahme auf die Figuren 6 bis 8 wird eine beispielhafte Ausgestaltung der in Fig. 2 schematisch angedeuteten Halteeinheit 56 veranschaulicht. Im Ausführungsbeispiel weist die Halteeinheit 56 verschiedene Haltearme oder Halteelemente 58, 60, 62, 64 auf, die aus einer Formgedächtnislegierung hergestellt sind, beispielsweise aus Nitinol. Eine Formgedächtnislegierung weist ein elastisches Verhalten auf, kehrt jedoch nach Aktivierung (beispielsweise thermischer Aktivierung) in eine ursprünglich eingeprägte Gestalt zurück. Dieser Effekt kann genutzt werden, um die Sensoreinrichtung 10 in einem angelegten/kontrahierten Zustand der Halteeinheit 56 in einen Strömungskanal 52 einzuführen und dort an der gewünschten Position sicher zu platzieren (Fig. 8).

In Fig. 6 ist einer der Haltearme 58 in verschiedenen Zuständen dargestellt. Ein mit 78 bezeichneter gekrümmter Pfeil verdeutlicht einen Übergang des Haltearm 58 vom angelegten/kontrahierten Zustand in einen expandierten Zustand. Der Haltearm 58 entfaltet sich. Im angelegten Zustand der Halteeinheit 56 kann die Sensoreinrichtung 10 durch den Strömungskanal 52 bewegt und zu einer gewünschten Position verbracht werden. Sodann kann die Halteeinheit 56 aktiviert werden, um vom kontrahierten Zustand ausgehend zu expandieren. Auf diese Weise kann die Sensoreinrichtung 10 mit hinreichender Sicherheit fixiert werden.

Fig. 7 veranschaulicht ein weiteres Halteelement 60, das gegensinnig zum Halteelement 58 orientiert ist. Die Halteelemente 58, 60 sind beispielhaft spiralförmig gewickelt, zumindest im kontrahierten Zustand der Halteeinheit 56.

Fig. 8 zeigt einen expandierten Zustand der Halteeinheit 56, in dem die Sensoreinrichtung 10 mit dem Sensorkörper 12 etwa im Zentrum des Strömungskanals 52 platziert ist. Im Ausführungsbeispiel weist die Halteeinheit 56 vier Haltearme 58, 60, 62, 64 auf, die teilweise gegensinnig orientiert sind. Diese Gestaltung sorgt dafür, dass ein jeweiliges Gegenmoment bzw. eine Gegenkraft, die bei der Abstützung der Haltearme 58, 60, 62, 64 an der Wandung 54 entstehen, kompensiert wird.

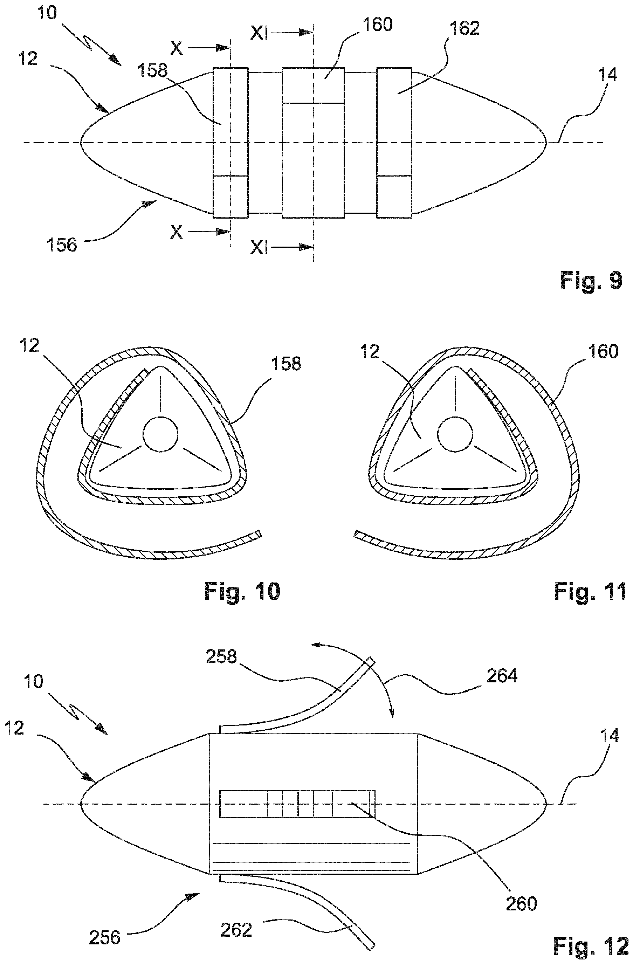

Die Figuren 9-11 veranschaulichen eine grundsätzlich ähnliche Gestaltung einer Halteeinheit 156, die an einem Sensorkörper 12 einer Sensoreinrichtung 10 angeordnet ist. Die Halteeinheit 156 weist im Ausführungsbeispiel drei Haltearme 158, 160, 162 auf, von denen die Haltearme 158, 162 gleichsinnig orientiert sind, wobei der Haltearm 160 gegensinnig dazu orientiert ist. Vergleiche hierzu die Schnitte durch den Haltearm 158 in Fig. 10 (entlang der Linie X-X in Fig. 9) sowie den Haltearm 160 in Fig. 11 (entlang der Linie XI-XI in Fig. 9).

Fig. 9 zeigt, dass die Haltearme 158, 160, 162 im kontrahierten Zustand am Sensorkörper 12 anliegen können. Der Momentenausgleich zwischen den Haltearmen 158, 160, 162 wird im Ausführungsbeispiel gemäß den Figuren 9-11 dadurch bewirkt, dass die in Fig. 9 ersichtliche Breite des Haltearms 160 der kombinierten Breite der Haltearme 158, 162 entspricht.

Fig. 12 veranschaulicht eine weitere beispielhafte Ausgestaltung einer Halteeinheit 256, die an einem Sensorkörper 12 einer Sensoreinrichtung 10 angeordnet ist. Die Halteeinheit 256 weist im Ausführungsbeispiel vier Haltearme auf, von denen in Fig. 12 drei Haltearme 258, 260, 262 sichtbar sind. Die Haltearme 258, 260, 262 sind um die Längsachse 14 winklig versetzt zueinander entlang des Umfangs des Sensorkörpers 12 angeordnet. Es versteht sich, dass auch eine von vier abweichende Anzahl Haltearme vorgesehen sein kann, die beispielsweise mit gleichen Winkelabständen um die Längsachse 14 versetzt entlang des Umfangs des Sensorkörpers 12 verteilt sind.

Der gekrümmten Doppelpfeil 264 veranschaulicht den Übergang der Haltearme 258, 260, 262 zwischen einem an den Sensorkörper 12 angeschmiegten Zustand und einem ausgelenkten Zustand. Auch die Haltearme 258, 260, 262 sind erfindungsgemäß aus einer Formgedächtnislegierung gebildet, so dass die Halteeinheit 256 bei entsprechender Aktivierung vom kontrahierten Zustand (angeschmiegter Zustand) in den expandierten Zustand (ausgelenkter Zustand) übergehen kann, um die Sensoreinrichtung 10 zu fixieren.

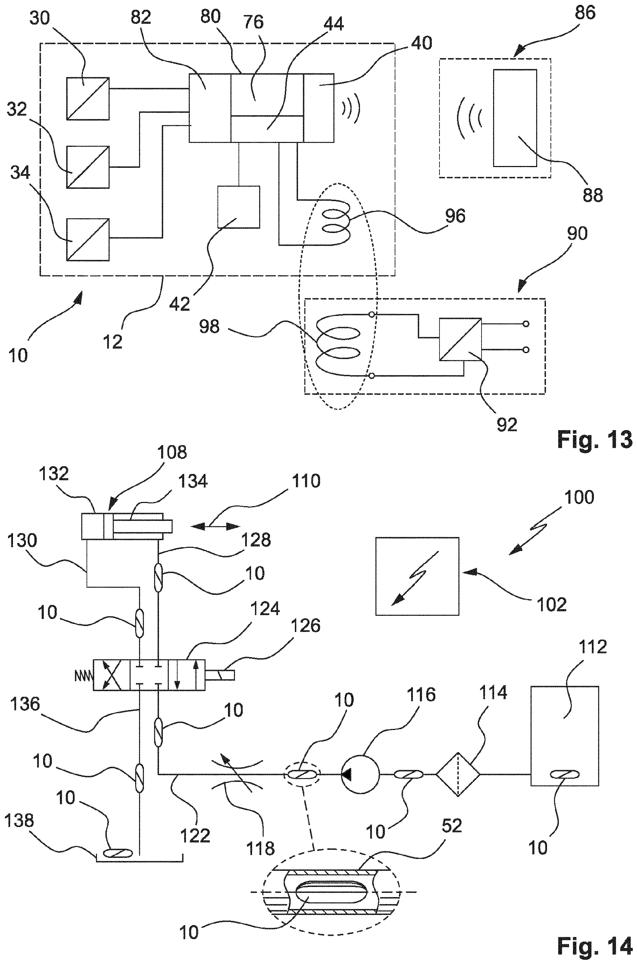

Fig. 13 veranschaulicht anhand eines schematischen Blockdiagramms eine Ausführungsform einer Sensoreinrichtung 10, die mit externen Elementen interagiert.

Die Sensoreinrichtung 10 weist einen Sensorkörper 12 auf, der Sensoren 30, 32, 34 beherbergt. Ferner ist ein Steuermodul 80 vorgesehen, dem die (lokale) Steuereinheit 76 zugeordnet ist. Von den Sensoren 30, 32, 34 erfasste Größen werden der Steuereinheit 76 über einen Wandler 82 zur weiteren Verarbeitung zugeführt. Das Steuermodul 80 umfasst ferner das Kommunikationsmodul 40. Im Ausführungsbeispiel ist das Kommunikationsmodul 40 zum drahtlosen Datenaustausch mit einer externen Kommunikationseinheit 86 befähigt, die einen Transceiver 88 aufweist. Der Datenaustausch erfolgt ohne direkten physischen Kontakt. Der Datenaustausch zwischen Kommunikationsmodul 40 und Kommunikationseinheit 86 kann auch eine Identifikation der Sensorvorrichtung 10 umfassen, wenn ein entsprechender (Software-) Identifikator abgefragt und übertragen wird.

Das Steuermodul 80 umfasst ferner das Empfangsmodul 44, das zum Laden des Speichers der Energiespeichereinheit 42 vorgesehen ist. Das Empfangsmodul 44 kann auch eine Ladesteuerung umfassen. Das Empfangsmodul 44 ist im Ausführungsbeispiel dazu befähigt, über eine Ladespule 96 von einer Energieübertragungseinheit 90 bereitgestellte Energie zu empfangen. Die Energieübertragungseinheit 90 weist einen Wandler 92 auf, der eine Ladespule 98 mit einer Wechselspannung beaufschlagt. Auf diese Weise wird ein Wechselfeld erzeugt, dass in der Ladespule 96 eine Spannung induziert. Es versteht sich, dass die (drahtlose) Energieübertragung zur Sensoreinrichtung 10 auch auf anderen Mechanismen beruhen kann. Die Kommunikationseinheit 86 und die Energieübertragungseinheit 90 können auch zu einer gemeinsamen Einheit zusammengefasst werden, die Kommunikationszwecken und Energiebereitstellungszwecken dient.

Fig. 14 veranschaulicht anhand eines schematischen Blockschaltbilds eine beispielhafte Ausgestaltung eines insgesamt mit 100 bezeichneten fluidischen Systems. Das fluidische System 100 weist eine Steuervorrichtung 102 auf, die im Ausführungsbeispiel mit einer Mehrzahl offenbarungsgemäßer Sensoreinrichtungen 10 kommuniziert, die über das fluidische System 100 verteilt sind.

Im Ausführungsbeispiel gemäß Fig. 14 sind die Sensoreinrichtungen 10 alle vom gleichen Typ. Sofern die Sensoreinrichtungen 10 als multifunktionale Sensoreinrichtungen gestaltet sind, können auch unterschiedliche Messaufgaben wahrgenommen werden. Sofern jede Sensoreinrichtung 10 eindeutig identifizierbar ist, kann eine hohe Anzahl in das System 100 integriert werden, ohne dass die Übersicht verloren geht.

Im Ausführungsbeispiel gemäß Fig. 14 weist das fluidische System 100 ein Stellglied 108 auf, das beispielsweise als pneumatischer oder hydraulischer Zylinder gestaltet ist. Das Stellglied 108 kann auch als Aktuator bezeichnet werden. Ein mit 110 bezeichneter Doppelpfeil veranschaulicht eine Ein- und Ausfahrbewegung. Es versteht sich, dass das in Fig. 14 beschriebene fluidische System 100 stellvertretend für eine Vielzahl denkbarer Konfigurationen fluidischer Systeme dargestellt ist, die offenbarungsgemäße Sensoreinrichtungen 10 nutzen können.

Das fluidische System 100 umfasst beispielhaft einen Vorratsbehälter 112 zur Bereitstellung des Fluids. Der Vorratsbehälter 112 ist mit einem Filter 114 gekoppelt. Stromabwärts schließt sich eine Pumpe 116 und ferner eine Drossel 118 an. Über einen Fluidpfad 122 wird ein Wegeventil 124 angesteuert, das im Ausführungsbeispiel vier Anschlüsse und drei Stellungen aufweist. Das Wegeventil 124 kann über ein Stellglied 126 betätigt werden.

An das Wegeventil 124 schließen sich Fluidpfade 128, 130 an, die im Ausführungsbeispiel in Kammern einer doppeltwirkenden (im Sinne von Ausfahren und Einfahren) Paarung aus Zylinder 132 und Kolben 134 münden. Mit anderen Worten handelt es sich bei dem Stellglied 108 im Ausführungsbeispiel um einen doppeltwirkenden Zylinder. An der vom Stellglied 108 abgewandten Seite des Wegeventil 124 ist ferner ein Anschluss für einen Fluidpfad 136 angeordnet, der in einen Sammler 138 mündet.

Die Steuervorrichtung 102 kann in geeigneter Weise auf die (manipulierbaren/steuerbaren) Elemente des fluidischen Systems 100 einwirken. Dies bezieht sich beispielhaft auf die Pumpe 116, die Drossel 118 und das Stellglied 126 des Wegeventils 124. Auf diese Weise kann insgesamt das Stellglied 108 (hydraulischer Zylinder) angesteuert und dessen Funktion geregelt werden.

Zu diesem Zweck sind in Fig. 14 diverse Sensoreinrichtungen 10 vorgesehen, die an geeigneten Positionen über das fluidische System 100 verteilt angeordnet sind. Beispielhaft ist jeweils zumindest eine Sensoreinrichtung 10 einem der Fluidpfade 122, 128, 130, 136 zugeordnet und dort im Strömungskanal 52 angeordnet, vergleiche den vergrößerten Ausschnitt in Fig. 14 zwischen der Pumpe 116 und der Drossel 118. Es bietet sich an, eine Mehrzahl oder gar Vielzahl von Sensoreinrichtungen 10 vorzusehen, um ein vollständiges oder nahezu vollständiges Zustandsbild des fluidischen Systems 100 erfassen zu können. Auf diese Weise lässt sich die Regelgüte erhöhen.

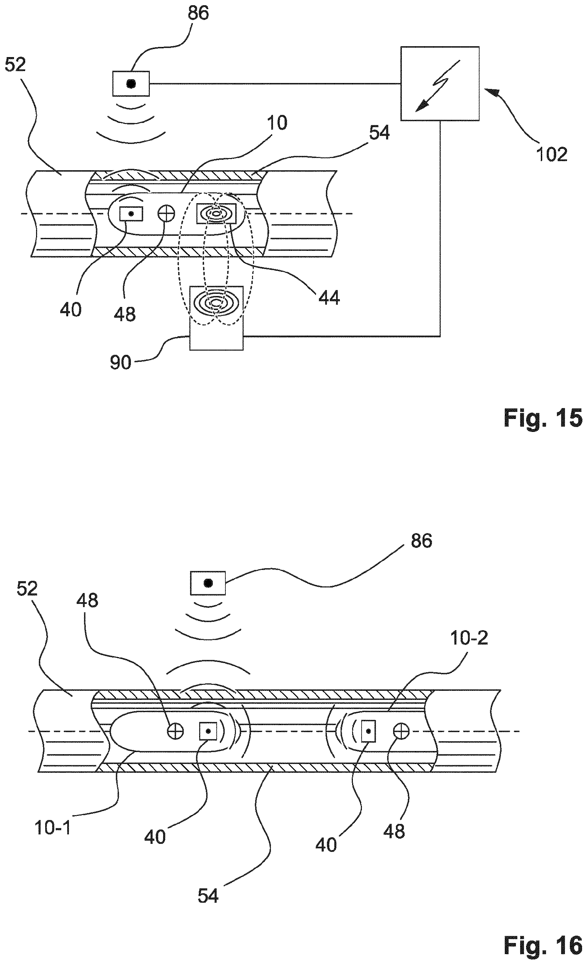

Auf Basis der Darstellungen gemäß den Figuren 13 und 14 veranschaulichen die Figuren 15 und 16 verschiedene Arten der Kommunikation zwischen Sensoreinrichtung 10 und der (übergeordneten) Steuervorrichtung 102. Die Kommunikationseinheit 86 und die Energieübertragungseinheit 90, die in Fig. 13 schematisch angedeutet sind, sind der Steuervorrichtung 102 (Fig. 14) zugeordnet.

Fig. 15 veranschaulicht, dass die im Strömungskanal 52 angeordnete Sensoreinrichtung 10 über das Kommunikationsmodul 40 durch die Wandung 54 hindurch drahtlos mit der Kommunikationseinheit 86 der Steuervorrichtung 102 kommuniziert. Die Kommunikation kann auch eine Abfrage eines Identifikators 48 umfassen. Gleichermaßen kann die Energieübertragungseinheit 90 drahtlos durch die Wandung 54 hindurch Energie für das Empfangsmodul 44 bereitstellen.

Auf Basis der Darstellung gemäß Fig. 15 veranschaulicht Fig. 16, dass eine Kommunikation auch direkt zwischen zwei Sensoreinrichtungen 10-1 und 10-2 erfolgen kann, die im Ausführungsbeispiel im gleichen Strömungskanal 52 angeordnet sind. Im gezeigten Ausführungsbeispiel kommuniziert die Sensoreinrichtung 10-2 drahtlos mit der Sensoreinrichtung 10-1. Dies kann auch eine Abfrage bzw. einen Austausch der Identifikatoren 48 beider Sensoreinrichtungen 10-1 und 10-2 umfassen. Zusätzlich (gleichzeitig oder zeitlich versetzt) kommuniziert die Sensoreinrichtung 10-1 drahtlos durch die Wandung 54 hindurch mit der Kommunikationseinheit 86.

Auf diese Weise kann die Sensoreinrichtung 10-1 als Mittler bzw. Relay für eine mittelbare Kommunikation zwischen der Sensoreinrichtung 10-2 und der Kommunikationseinheit 86 dienen, die gegebenenfalls auf direktem Wege nicht möglich wäre. Mit einer Vielzahl von Sensoreinrichtungen 10 kann in ähnlicher Weise ein Kommunikationsnetz/Mesh gebildet werden, so dass die benötigten Informationen abgefragt und übermittelt werden können.

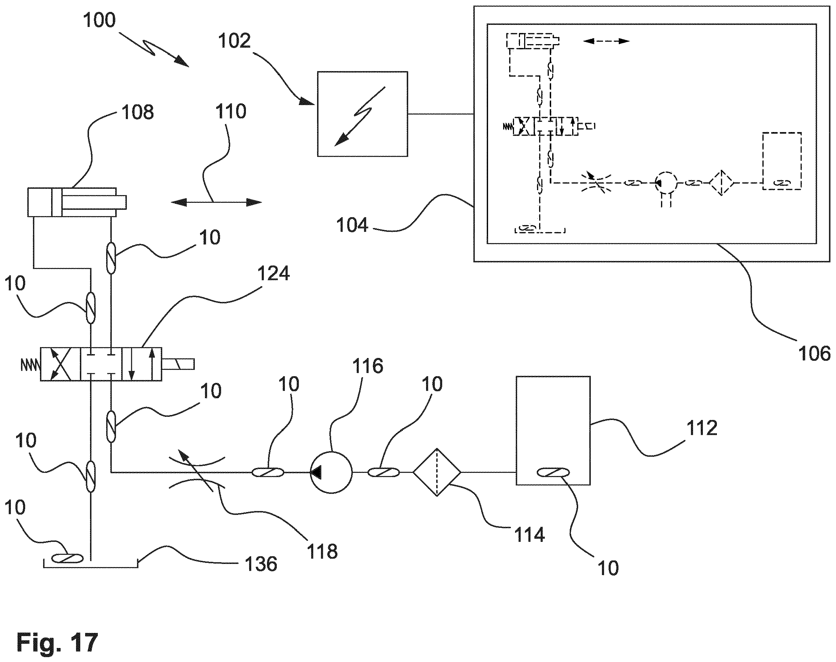

Fig. 17 basiert auf der Darstellung gemäß Fig. 14 und veranschaulicht, dass die Steuervorrichtung 102 des fluidischen Systems 100 bei der Steuerung auf einem in einem Speicher 104 bereitgestellten digitalen Zwilling 106 von Komponenten des fluidischen Systems 100 zurückgreifen kann. Vorzugsweise umfasst der digitale Zwilling 106 computergestützte Modelle aktiver und passiver Komponenten des fluidischen Systems 100 und insbesondere auch der verbauten Sensoreinrichtungen 10, die über das fluidische System 100 verteilt sind.

Auf diese Weise trägt der digitale Zwilling 106 dazu bei, die große Anzahl an Messwerten handhaben und verarbeiten zu können. Von den Sensoreinrichtungen 10 bereitgestellte Daten werden dem digitalen Zwilling 106 aufgeprägt bzw. mit dort simulierten Daten verglichen. Insgesamt kann auf diese Weise das Systemverhalten in Breite und Tiefe intensiver überwacht werden, wobei sich der erforderliche Aufwand in Grenzen hält, wenn der digitale Zwilling 106 des fluidischen Systems 100 aufgebaut und hinreichend mit dem realen fluidischen System 100 abgeglichen ist.

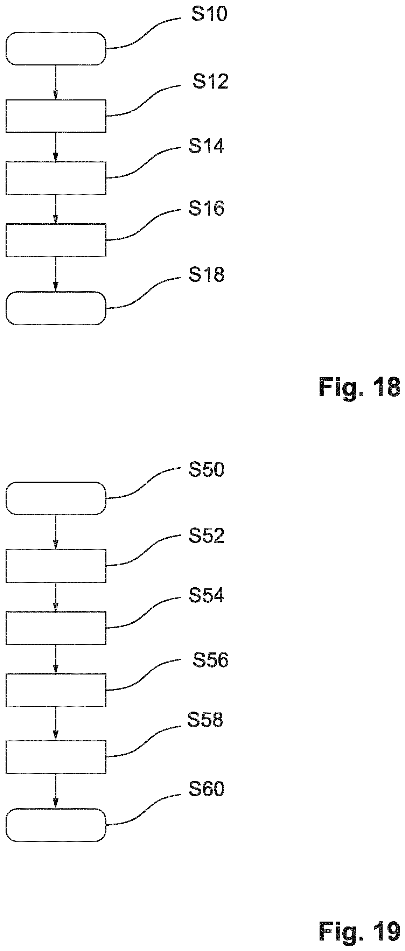

Mit Bezugnahme auf Fig. 18 wird anhand eines Blockdiagramm eine Ausführungsform eines Verfahrens zur Platzierung einer Sensoreinrichtung in einem Fluidpfad eines fluidischen Systems veranschaulicht.

Das Verfahren beginnt in einem Schritt S10. Ein Schritt S12 umfasst die Bereitstellung einer Sensoreinrichtung, die mit einer Halteeinheit versehen ist, die sich in einem kontrahierten Zustand befindet. Es schließt sich ein Schritt S14 an, der die Positionierung der Sensoreinrichtung in einem fluidischen System, beispielsweise in einem Strömungskanal beinhaltet. Bedarfsweise umfasst der Schritt S14 die gezielte Bewegung der Sensoreinrichtung. Bedarfsweise umfasst der Schritt S14 eine Erfassung und Überwachung der gegebenen Position der Sensoreinrichtung.

Wenn die Sensoreinrichtung an der gewünschten Position ist, erfolgt in einem weiteren Schritt S16 eine Aktivierung der Halteeinheit, um diese in einem expandierten Zustand zu überführen. Auf diese Weise wird die Sensoreinrichtung an der aktuellen Position fixiert. Dies erfolgt beispielsweise durch thermische oder magnetische Aktivierung. Die Aktivierung der Halteeinheit erfolgt vorzugsweise ohne direkte mechanische Interaktion mit der Sensoreinrichtung. Ein Schritt S18 beschließt das Verfahren.

Mit Bezugnahme auf Fig. 19 wird anhand eines Blockdiagramms eine Ausführungsform eines Verfahrens zur Regelung eines fluidischen Systems unter Verwendung mehrerer Sensoreinrichtungen beschrieben.

Das Verfahren beginnt in einem Schritt S50. Es folgt ein Schritt S52, der die Bereitstellung eines fluidischen Systems umfasst, beispielsweise eines pneumatischen Systems oder eines hydraulischen Systems. Das fluidische System umfasst zumindest ein Stellglied (Aktuator), das mittels einer Steuervorrichtung angesteuert wird.

Es schließt sich ein Schritt S54 an, der die Bereitstellung und Platzierung einer Mehrzahl von Sensoreinrichtungen im fluidischen System umfasst. Die Platzierung kann beispielhaft anhand des in Fig. 18 beschriebenen Verfahrens erfolgen. Die Sensoreinrichtungen bilden ein verteiltes Sensornetz. In einer beispielhaften Ausgestaltung sind die Sensoreinrichtungen multifunktionale Sensoreinrichtungen vom gleichen Typ.

Ein nachfolgender Schritt S56 betrifft die Erfassung einer Mehrzahl von Messwerten mit den Sensoreinrichtungen. Die Messwerte beschreiben das Systemverhalten. Die Messwerte werden vorzugsweise drahtlos an die Steuervorrichtung des fluidischen Systems übermittelt.

Es schließt sich ein Schritt S58 an, der die Regelung des fluidischen Systems auf Basis der mit den verteilten Sensoreinrichtungen erfassten Messwerte beinhaltet. Ein Schritt S60 beschließt das Verfahren.

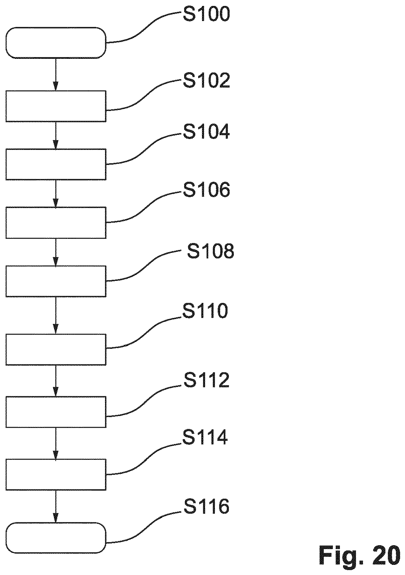

Mit Bezugnahme auf Fig. 20 wird anhand eines Blockdiagramms eine weitere Ausführungsform eines Verfahrens zur Regelung eines fluidischen Systems unter Verwendung mehrerer Sensoreinrichtungen beschrieben.

Das Verfahren beginnt in einem Schritt S100. Es folgt ein Schritt S102, der die Bereitstellung eines fluidischen Systems umfasst, beispielsweise eines pneumatischen Systems oder eines hydraulischen Systems. Das fluidische System umfasst zumindest ein Stellglied (Aktuator), das mittels einer Steuervorrichtung angesteuert wird.

Das Verfahren umfasst ferner einen Schritt S104, der die Bereitstellung eines digitalen Zwilling des fluidischen Systems beinhaltet. Der digitale Zwilling kann zunächst in Anlehnung an ähnliche, bekannte fluidische Systeme erzeugt bzw. von diesen abgeleitet werden. Der digitale Zwilling kann auf Basis einer Bibliothek erzeugt werden, zumindest Teile davon.

Es schließt sich ein Schritt S106 an, der die Bereitstellung und Platzierung einer Mehrzahl von Sensoreinrichtungen im fluidischen System umfasst. Die Platzierung kann beispielhaft anhand des in Fig. 18 beschriebenen Verfahrens erfolgen. Die Sensoreinrichtungen bilden ein verteiltes Sensornetz. In einer beispielhaften Ausgestaltung sind die Sensoreinrichtungen multifunktionale Sensoreinrichtungen vom gleichen Typ.

Es folgt ein Schritt S108, der die Ergänzung des digitalen Zwilling um computerbasierte Modelle der Sensoreinrichtungen umfasst. Zu diesem Zweck kann die Steuervorrichtung Identifikatoren der Sensoreinrichtungen im realen fluidischen System abfragen. Ferner kann die Steuervorrichtung die Positionen der Sensoreinrichtungen im realen fluidischen System erfassen und den digitalen Zwilling anpassen.

Ein nachfolgender Schritt S110 betrifft die Erfassung einer Mehrzahl von Messwerten mit den Sensoreinrichtungen. Die Messwerte beschreiben das Systemverhalten. Die Messwerte werden vorzugsweise drahtlos an die Steuervorrichtung des fluidischen Systems übermittelt.

Das Verfahren umfasst ferner einen Schritt S112, in dem die beim realen fluidischen System erfassten Messwerte als Ist-Werte beim digitalen Zwilling berücksichtigt werden. Auf diese Weise kann zum Beispiel geprüft werden, ob das Verhalten des realen fluidischen Systems und des digitalen Zwillings übereinstimmen, oder ob Abweichungen festzustellen sind.

Es schließt sich ein Schritt S114 an, der die Regelung des fluidischen Systems auf Basis der mit den verteilten Sensoreinrichtungen erfassten Messwerte sowie auf Basis des Systemverhaltens des digitalen Zwillings beinhaltet. Ferner kann der Schritt S114 auch die Ableitung von Maßnahmen zur prädiktiven Wartung umfassen. Ein Schritt S116 beschließt das Verfahren.

## Patentansprüche

1. Gekapselte Sensoreinrichtung (10) zur Überwachung eines Fluidstroms in einem Fluidpfad (122, 128, 130, 136), mit
einem Sensorkörper (12), der innerhalb eines Strömungskanals (52) platzierbar ist und eine Längserstreckung aufweist,
einer Energiespeichereinheit (42),
einer Sensoreinheit (22) mit zumindest einem Sensor (30, 32, 34) zur Erfassung einer physikalischen Größe,
wobei der Sensorkörper (12) strömungsgünstig gestaltet ist, und
wobei der Sensorkörper (12) eine verformbare Halteeinheit (56, 156, 256) trägt, die in einem expandierten Zustand und einem kontrahierten Zustand betreibbar ist, um die Sensoreinrichtung (10) im Strömungskanal (52) festzulegen, **gekennzeichnet durch** zumindest einem Kommunikationsmodul (40) zur drahtlosen Kommunikation und **dadurch**, dass die Halteeinheit (56, 156, 256) zumindest ein Halteelement (58, 60, 62, 64; 158, 160, 162; 258, 260, 262) aus einer Formgedächtnislegierung aufweist.

2. Sensoreinrichtung (10) nach Anspruch 1, **dadurch gekennzeichnet, dass** der Sensorkörper (12) ein erstes Ende (16) und ein zweites Ende (18) aufweist, die voneinander abgewandt sind, und dass das erste Ende (16) und das zweite Ende (18) verjüngt sind.

3. Sensoreinrichtung (10) nach Anspruch 2, **dadurch gekennzeichnet, dass** das erste Ende (16) und das zweite Ende (18) eine einheitliche strömungsgünstige Gestaltung aufweisen.

4. Sensoreinrichtung (10) nach einem der Ansprüche 1-3, **dadurch gekennzeichnet, dass** die Halteeinheit (56, 156, 256) berührungslos aktivierbar ist, um zwischen dem kontrahierten Zustand und dem expandierten Zustand zu wechseln.

5. Sensoreinrichtung (10) nach einem der Ansprüche 1-4, **dadurch gekennzeichnet, dass** die Halteeinheit (56, 156, 256) zwei oder mehr Halteelemente (58, 60, 62, 64; 158, 160, 162; 258, 260, 262) aufweist, die entlang der Längserstreckung des Sensorkörpers (12) oder um die Längsachse (14) des Sensorkörpers (12) versetzt am Sensorkörper (12) angeordnet sind.

6. Sensoreinrichtung (10) nach Anspruch 5, **dadurch gekennzeichnet, dass** zumindest zwei der Halteelemente (58, 60, 62, 64; 158, 160, 162; 258, 260, 262) spiralförmig gestaltet und gegensinnig orientiert sind.

7. Sensoreinrichtung (10) nach einem der Ansprüche 1-6, **dadurch gekennzeichnet, dass** der Sensorkörper (12) einen dreieckigen oder sternförmigen Querschnitt aufweist.

8. Sensoreinrichtung (10) nach einem der Ansprüche 1-7, **dadurch gekennzeichnet, dass** die Energiespeichereinheit (42) mit einem Empfangsmodul (44) gekoppelt ist, das zur Entgegennahme von von einer drahtlosen Energieübertragungseinheit (90) bereitgestellter Energie ausgebildet ist.

9. Sensoreinrichtung (10) nach einem der Ansprüche 1-8, **dadurch gekennzeichnet, dass** beim Sensorkörper (12) zumindest ein Marker oder ein Identifikator (48) vorgesehen ist, der zumindest eine Identifizierung oder eine Positionserfassung der Sensoreinrichtung (10) erlaubt, insbesondere durch eine Steuervorrichtung (102).

10. Verwendung einer Mehrzahl von Sensoreinrichtungen (10) nach einem der Ansprüche 1-9 zur Steuerung oder Regelung zumindest eines Stellglieds (108) eines fluidischen Systems (100), wobei eine Mehrzahl von Messgrößen erfasst wird und in die Steuerung oder Regelung einfließt.

11. Fluidisches System (100), mit zumindest einem Fluidpfad (122, 128, 130, 136) mit einem Strömungskanal (52), der eine Wandung (54) aufweist, zumindest einem Stellglied (108) zur Steuerung einer Fluidströmung durch den Strömungskanal (52), zumindest einer Sensoreinrichtung (10), vorzugsweise zwei oder mehr Sensoreinrichtungen (10), nach einem der Ansprüche 1-9, zumindest einer Kommunikationseinheit (86) zur Erfassung von vom Kommunikationsmodul (40) bereitgestellten Daten, und mit einer Steuervorrichtung (102), die auf Basis der bereitgestellten Daten das zumindest eine Stellglied (108) ansteuert.

12. Fluidisches System (100) nach Anspruch 11, ferner aufweisend eine Energieübertragungseinheit (90), die dazu ausgebildet ist, der Energiespeichereinheit (42) der Sensoreinrichtung (10) drahtlos Energie zuzuführen.

13. Fluidisches System (100) nach einem der Ansprüche 11 oder 12, wobei der Steuervorrichtung (102) ein computergestütztes Modell der zumindest einen Sensoreinrichtung (10) zur Verfügung steht.

14. Fluidisches System (100) nach Anspruch 13, wobei der Steuervorrichtung (102) ein computergestütztes Modell des zumindest einen Stellglieds (108) und vorzugsweise ein computergestütztes Modell des zumindest einen Fluidpfades (122, 128, 130, 136) zur Verfügung steht.

15. Fluidisches System (100) nach Anspruch 13 oder 14, wobei der Steuervorrichtung (102) ein digitaler Zwilling (106) zumindest eines Teilbereichs des fluidischen Systems (100) zur Verfügung steht, wobei der digitale Zwilling (106) computergestützte Modelle von Systemkomponenten umfasst, und wobei der digitale Zwilling (106) eine aktuelle Position der zumindest einen Sensoreinrichtung (10) berücksichtigt.

## Claims

1. An encapsulated sensor device (10) for monitoring a fluid flow in a fluid path (122, 128, 130, 136), comprising
a sensor body (12) which is arranged to be placed within a flow channel (52) and which has a longitudinal extension,
an energy storage unit (42),
a sensor unit (22) having at least one sensor (30, 32, 34) for detecting a physical variable,
wherein the sensor body (12) is of a streamlined design, and
wherein the sensor body (12) supports a deformable holding unit (56, 156, 256) which is operable in an expanded state and a contracted state to fix the sensor device (10) in the flow channel (52),
**characterized by** at least one communication module (40) for wireless communication, and
in that the holding unit (56, 156, 256) has at least one holding element (58, 60, 62, 64; 158, 160, 162; 258, 260, 262) made of a shape memory alloy.

2. The sensor device (10) according to claim 1, **characterized in that** the sensor body (12) has a first end (16) and a second end (18) which face away from each other, and **in that** the first end (16) and the second end (18) are tapered.

3. The sensor device (10) according to claim 2, **characterized in that** the first end (16) and the second end (18) have a uniform streamlined design.

4. The sensor device (10) according to any one of claims 1-3, **characterized in that** the holding unit (56, 156, 256) is arranged to be activated without contact in order to switch between the contracted state and the expanded state.

5. The sensor device (10) according to any one of claims 1-4, **characterized in that** the holding unit (56, 156, 256) has two or more holding elements (58, 60, 62, 64; 158, 160, 162; 258, 260, 262) which are arranged offset on the sensor body (12) along the longitudinal extension of the sensor body (12) or about the longitudinal axis (14) of the sensor body (12).

6. The sensor device (10) according to claim 5, **characterized in that** at least two of the holding elements (58, 60, 62, 64; 158, 160, 162; 258, 260, 262) are helically shaped and oriented in opposite directions.

7. The sensor device (10) according to any one of claims 1-6, **characterized in that** the sensor body (12) has a triangular or star-shaped cross-section.

8. The sensor device (10) according to any one of claims 1-7, **characterized in that** the energy storage unit (42) is coupled to a receiving module (44) that is arranged to receive energy that is provided by a wireless energy transmission unit (90).

9. The sensor device (10) according to any one of claims 1-8, **characterized in that** at least one marker or identifier (48) is provided on the sensor body (12), which allows at least one of an identification or a position detection of the sensor device (10), in particular by a control device (102).

10. A use of a plurality of sensor devices (10) according to any one of claims 1-9 for controlling or regulating at least one actuator (108) of a fluidic system (100), wherein a plurality of measured variables is detected and included in the control or regulation.

11. A fluidic system (100), comprising at least one fluid path (122, 128, 130, 136) with a flow channel (52) having a wall (54), at least one actuator (108) for controlling a fluid flow through the flow channel (52), at least one sensor device (10), preferably two or more sensor devices (10), according to any one of claims 1-9, at least one communication unit (86) for detecting data provided by the communication module (40), and comprising a control device (102) which controls the at least one actuator (108) on the basis of the data provided.

12. The fluidic system (100) according to claim 11, further comprising an energy transfer unit (90) that is adapted to wirelessly supply energy to the energy storage unit (42) of the sensor device (10).

13. The fluidic system (100) according to any one of claims 11 or 12, wherein a computerized model of the at least one sensor device (10) is available to the control device (102).

14. The fluidic system (100) according to claim 13, wherein a computerized model of the at least one actuator (108) and preferably a computerized model of the at least one fluid path (122, 128, 130, 136) is available to the control device (102).

15. The fluidic system (100) according to claim 13 or 14, wherein a digital twin (106) of at least a part of the fluidic system (100) available to the control device (102), wherein the digital twin (106) comprises computerized models of system components, and wherein the digital twin (106) takes into account a current position of the at least one sensor device (10).

## Revendications

1. Dispositif capteur (10) encapsulé destiné à surveiller un courant de fluide dans un trajet de fluide (122, 128, 130, 136), comprenant
un corps de capteur (12), qui peut être placé à l'intérieur d'un canal d'écoulement (52) et qui présente une extension longitudinale,
une unité de stockage d'énergie (42),
une unité de détection (22) comprenant au moins un capteur (30, 32, 34) destiné à détecter une grandeur physique,
le corps de capteur (12) étant configuré de manière à favoriser l'écoulement, et
le corps de capteur (12) portant une unité de maintien (56, 156, 256) déformable qui peut fonctionner dans un état déployé et un état contracté en vue de fixer le dispositif de capteur (10) dans le canal d'écoulement (52),
**caractérisé par** au moins un module de communication (40) servant à la communication sans fil et en ce que l'unité de maintien (56, 156, 256) comprend au moins un élément de maintien (58, 60, 62, 64 ; 158, 160, 162 ; 258, 260, 262) en un alliage à mémoire de forme.

2. Dispositif capteur (10) selon la revendication 1, **caractérisé en ce que** le corps de capteur (12) possède une première extrémité (16) et une deuxième extrémité (18) qui sont opposées l'une à l'autre, et **en ce que** la première extrémité (16) et la deuxième extrémité (18) sont effilées.

3. Dispositif capteur (10) selon la revendication 2, **caractérisé en ce que** la première extrémité (16) et la deuxième extrémité (18) présentent une configuration uniforme favorable à l'écoulement.

4. Dispositif capteur (10) selon l'une des revendications 1 à 3, **caractérisé en ce que** l'unité de maintien (56, 156, 256) peut être activée sans contact pour basculer entre l'état contracté et l'état déployé.

5. Dispositif capteur (10) selon l'une des revendications 1 à 4, **caractérisé en ce que** l'unité de maintien (56, 156, 256) possède au moins deux éléments de maintien (58, 60, 62, 64 ; 158, 160, 162 ; 258, 260, 262) qui sont disposés le long de l'extension longitudinale du corps de capteur (12) ou sur le corps de capteur (12) décalés autour de l'axe longitudinal (14) du corps de capteur (12).

6. Dispositif capteur (10) selon la revendication 5, **caractérisé en ce qu'**au moins deux des éléments de maintien (58, 60, 62, 64 ; 158, 160, 162 ; 258, 260, 262) sont réalisés en forme de spirale et sont orientés en sens inverse.

7. Dispositif capteur (10) selon l'une des revendications 1 à 6, **caractérisé en ce que** le corps de capteur (12) présente une section transversale triangulaire ou en forme d'étoile.

8. Dispositif capteur (10) selon l'une des revendications 1 à 7, **caractérisé en ce que** l'unité de stockage d'énergie (42) est couplée à un module de réception (44), qui est configuré pour la réception d'énergie fournie par une unité de transmission d'énergie sans fil (90).

9. Dispositif capteur (10) selon l'une des revendications 1 à 8, **caractérisé en ce qu'**au moins un marqueur ou un identificateur (48) est présent sur le corps de capteur (12), lequel permet au moins une identification ou une détection de position du dispositif capteur (10), notamment par un dispositif de commande (102).

10. Utilisation d'une pluralité de dispositifs capteurs (10) selon l'une des revendications 1 à 9 pour la commande ou la régulation d'au moins un actionneur (108) d'un système fluidique (100), une pluralité de grandeurs de mesure étant acquises et intervenant dans la commande ou la régulation.

11. Système fluidique (100), comprenant au moins un trajet de fluide (122, 128, 130, 136) pourvu d'un canal d'écoulement (52) qui possède une paroi (54), au moins un actionneur (108) destiné à commander un écoulement de fluide à travers le canal d'écoulement (52), au moins un dispositif capteur (10), de préférence deux dispositifs capteurs (10) ou plus, selon l'une des revendications 1 à 9, au moins une unité de communication (86) destinée à l'acquisition de données fournies par le module de communication (40), et comprenant un dispositif de commande (102) qui commande l'au moins un actionneur (108) sur la base des données fournies.

12. Système fluidique (100) selon la revendication 11, possédant en outre une unité de transmission d'énergie (90) qui est configurée pour acheminer de l'énergie sans fil à l'unité de stockage d'énergie (42) du dispositif capteur (10).

13. Système fluidique (100) selon l'une des revendications 11 ou 12, le dispositif de commande (102) disposant d'un modèle informatisé de l'au moins un dispositif capteur (10).

14. Système fluidique (100) selon la revendication 13, le dispositif de commande (102) disposant d'un modèle informatisé de l'au moins un actionneur (108) et, de préférence, d'un modèle informatisé de l'au moins un trajet de fluide (122, 128, 130, 136).

15. Système fluidique (100) selon la revendication 13 ou 14, le dispositif de commande (102) disposant d'un jumeau numérique (106) d'au moins une zone partielle du système fluidique (100), le jumeau numérique (106) comprenant des modèles informatisés de composants du système, et le jumeau numérique (106) tenant compte d'une position actuelle de l'au moins un dispositif capteur (10).
